# EUROPEAN PATENT APPLICATION

(11) **EP 4 841 622 A1**
(43) Date of publication of application: **18.11.2026**
(21) Application number: 26177337.8
(22) Date of filing: 07.05.2026
(51) Int. Cl.: G10L 15/16, G10L 15/183, G06N 3/0455

(54) **CAUSALITY INDUCED TRANSFORMER ATTENTION DECODER FOR IMPROVED ASR**

(30) Priority: 12.05.2025 US 202563804114 P
(71) Applicant: Oracle International Corporation, Redwood Shores, CA 94065 (US)
(72) Inventor: TYAGI, Vivek, Redwood City, 94065 (US); RAVI, Sujith, Redwood City, 94065 (US); BHARADWAJ, Sujeeth Subramanya, Redwood City, 94065 (US)
(74) Representative: D Young & Co LLP

(57) **Abstract**

A system is disclosed comprising processing circuitry configured to execute a transformer network. The transformer network includes a cross-attention layer. The processing circuitry is configured to, for the cross-attention layer, boost a cross-attention probability centroid by a desired factor.

## Description

### INTRODUCTION

Recently, automatic speech recognition (ASR) systems based on transformers and conformers have become very successful. Despite the excellent performance of transformers and conformers within such systems, these systems consistently exhibit two problems. First, transformer or conformer ASR decoders may not recognize any words within a long phrase of an audio file (i.e., deafness), thereby leading to high deletion error rates. Secondly, transformer or conformer ASR decoders may repeat a phrase multiple times (i.e., hallucinations), thereby leading to high insertion error rates. It should be noted that, for the purposes of explanation, transformer and conformer may be used interchangeably.

In this work, these problems are investigated by analyzing and illustrating the corresponding cross-attention probabilities that show a very poor time alignment with the underlying speech signal.

To overcome these problems, a simple algorithm has been developed that induces causality in transformer ASR decoders by slightly moving the centroid of a cross-attention probability mass function towards the right with every time step, while retaining a partial contour of the original cross-attention probability mass function as computed by the baseline cross-attention of the transformer encoder-decoder. With this proposed algorithm, the cross-attention probabilities retain good time alignment with the underlying signal leading to 8.9% average relative word error rate (WER) reduction on the Librispeech test sets compared to a state-of-the-art conformer ASR baseline.

### DETAILED DESCRIPTION

Particular embodiments are set out in the independent claims. Various optional examples are set out in the dependent claims. Encoder-Decoder transformer-based ASR architectures have recently become the state-of-the-art within the context of ASR systems. This is owing to two important attributes. First, the encoder of the transformer identifies hidden representations across the entire speech utterance via a self-attention mechanism. Secondly, a cross-attention layer in the encoder and the decoder of the transformer predicts the next sub-word by executing a low-level fusion between the previous sub-word units (or character level language model (LM)) and the hidden representations identified by the encoder, thereby leading to superior ASR accuracy.

Despite the excellent performance of transformers in ASR systems, transformers can have certain ad-hoc design choices which are not well understood and sometimes lead to problems. First, transformers may experience deafness and completely ignore a speech segment (an issue which has been widely reported by the users of the OpenAI Whisper ASR systems). Additionally, transformers may hallucinate and get stuck repeating a phrase or single word completely randomly (another issue which has been widely reported by the users of the OpenAI Whisper ASR systems).

Prior research works have highlighted these problems and refer to the deafness problem as early stopping and the hallucination problem as looping. To overcome these problems, scholars have developed a masked tokens-based approach, where some tokens are randomly masked during transformer training. The hypothesis was that the tokens will improve the implicit fusion of language model (LM) and the acoustic hidden representations in the transformer encoder. However, this approach did not improve the word error rate (WER) over baseline transformers autoregressive decoding.

Researchers have also adjusted the self-attention mechanism of the transformers to a time restricted speech segment to reduce the computation cost. However, this approach does not address the deafness and hallucination problems and is only helpful to reduce the computational cost of the system.

Other research works exist, where the researchers have further analyzed the problem of attention-sink in text large language models (LLMs). Attention-sink refers to the strange phenomenon in text LLMs where the initial token receives disproportionately large self-attention scores despite the lack of semantic importance. Researchers analyze this problem in detail and present an algorithm to recalibrate the self-attention probabilities in a text LLM like LLama-30b which improves its accuracy on text classification tasks.

Unfortunately, previous studies have not offered a detailed explanation of why deafness and hallucinations occur in transformer ASR systems. Additionally, there is a lack of principled ways to solve these two problems in transformer ASR systems. As such, presented herein includes detailed equations and actual cross-attention probability heatmaps that illustrate these problems, which happen due to auto-regressive attention based decoding that is not time-causal unlike the previous generation Hidden Markov Model-Gaussian Mixture Model (HMM-GMM), Hidden Markov Model-Deep Neural Network (HMM-DNN), or Contextual Temporal Classification (CTC) based ASR systems which are time synchronous and time-causal and hence don't suffer from deafness or hallunications.

Additionally, a new algorithm is presented herein that improves the autoregressive decoding algorithm by introducing an induction bias to shift the centroid of the cross-attention probability mass function towards right with each decoded word *yₜ*. Finally, ASR results on the Librispeech test sets are presented herein. The experimental results indicate that the presented causal transformer decoding algorithm obtains 8.9% average relative WER reduction over the baseline autoregressive transformer decoder and thereby helps to overcome these problems to a good extent.

Let a speech spectral feature sequence computed from an audio file be denoted by *X* = [*x*₁, *x*₂, ... , *x_{N}*] and let a sequence of tokens/phonemes corresponding to the ground truth of the audio file be denoted by *Y =* [*y*₁, *y*₂, ... *, y_{U}*]*.* The classical HMM-DNN and Recurrent Neural Network-CTC (RNN-CTC) based ASR systems are trained by computing an expected likelihood of target sequence *Y* given *X*, where the expectation is over multiple alignment paths which are efficiently computed by the expectation-maximization (EM) algorithm in case of HMM and similar EM algorithm for the case of CTC as well and network parameters *θ*.

Let *A_{X,Y}* denote all possible alignment paths between *X* and *Y*. The maximum likelihood decoding (which is also time synchronous) is obtained as follows: $Y * = {argmax}_{A ∈ {A}_{X , Y}} {\prod }_{t = 1}^{N} {p}_{t} \left({a}_{t}\left|{x}_{t}\right.\right)$ (1)
Where *A* is a specific alignment sequence and *aₜ* is the token/phoneme emitted at time *'t'* by the feature frame *xₜ* in this alignment sequence *A*.

Now, consider two-time instances *t*₁, *t*₂ such that *t*₁ < *t*₂ and let *x*₁, *x*₂ be the corresponding speech frames which emitted the output tokens *a*_{*t*1}, *aₜ₂* in equation (1). An important property of HMM-DNN or CTC decoding is that it guarantees that the speech frame *x*₁ occurs before the speech frame *x*₂ ensuring a time-causality between the decoded tokens at and the underlying speech signal. As seen below, this time causality is not guaranteed in the case of autoregressive transformers decoding

In contrast to the above, transformers perform autoregressive cross-attention based decoding between the partial decoded sequence *Yₜ* = [*y*₁, *y*₂, ... *, yₜ*] and the output encoded embedding sequence *H* = [*h*₁, *h*₂, ... , *h_{N}*] of the input spectral features sequence *X* = [*x*₁, *x*₂, ... , *x*_{2**N*}]*.* For the sake of simplicity, a single transformer decoder layer in reference to the equations below will be discussed herein. This is not meant to limit the intended applications of the proposed technology, but rather to provide an example. Meaning that, the same analysis applies to multiple transformer decoder layers (e.g., 6 decoder layers). In the following exposition embedding, vector and hidden representation are used interchangeably, and the focus is on a vector representation in either encoder or decoder of dimensionality *D*.

Let an input sequence of speech short-time Fourier transform (STFT) features with 2 _{*} *N* frames be denoted as *X =* (*x*₁, *x*₂, ... , *x*_{2**N*}). *X* is inputted to the transformer encoder layers to obtain final encoder layer's representation *H =* (*h*₁, *h*₂, ... , *h_{N}*) and *H* can be seen a rich representation of speech features obtained via encoder's nonlinear transforms and has half the frames/embedding vectors of the input STFT sequence *X* due to down sampling in the encoder layer. As such: $H = Transformer Encoder \left(X\right)$ (2)

On the transformer decoder side, a partial sequence (*y*₁, *y*₂, ... , *yₜ*) has been decoded and the decoder is going to autoregressively decode *y*_{(*t*+1)}. As such, the following internal vectors are in the decoder: ${s}_{t} = Self - Attention \left({y}_{1},{y}_{2},…,{y}_{t}\right)$ (3) ${r}_{t} = Cross - Attention \left(s\left(t\right),\left[h1,h2,…,{h}_{N}\right]\right)$ (4) $r {′}_{t} = MLP \left({r}_{t}\right)$ (5) ${y}_{t + 1} = argmax \left(softmax\left(r{′}_{t}\right)\right)$ (6)

Here *sₜ* is the value of the current token in the decoder after decoder causal self-attention applied to the sequence (*y*₁, *y*₂, ... , y*ₜ*). Note that *rₜ* is the decoder's current representation after the cross-attention of *sₜ* with the encoder hidden representations [*h*₁, *h*₂, *... , h_{N}*].

Let *qₜ* be the query vector of decoder representation *sₜ* and *kᵢ* and *vᵢ* respectively be the key and value vectors of encoder's last layer's hidden representation *hᵢ, i* ∈ 1, *N.* Such that: ${q}_{t} = Q \times {s}_{t}$ (7) ${k}_{i} = K \times {h}_{i}$ (8) ${v}_{i} = V \times {h}_{i} , i ∈ \left(1, N\right)$ (9)

*Q, K, V* are the query, key and value matrices of the encoder-decoder cross-attention layer.

Next, the cross-attention probability *α_{t,i}, i* ∈ (1, *N)* between the decoder query vector *qₜ* and encoder hidden vectors (*h*₁, *h*₂, *... , hₙ*) is computed. Note, the encoder vectors (*h*₁, *h*₂, *..., hₙ*) are final learned speech features that are learned by the multiple non-linear transforms in the encoder layers, such that these features are inputted to the decoder by cross-attention to finally predict the next token/word y_{*t*+1}. As such: $α \left(t, i\right) = \frac{exp \left({q}_{t}⋅{k}_{i}\right)}{{\sum }_{j = 1}^{N} exp \left({q}_{t}⋅{k}_{j}\right)} , i ∈ \left(1, N\right)$ (10) ${r}_{t} = {\sum }_{i = 1}^{N} α \left(t, i\right) ∗ {v}_{i}$ (11) ${r}_{t} = {\sum }_{i = 1}^{N} α \left(t, i\right) ∗ \left(V\times {h}_{i}\right)$ (12)

Such that _{*} denotes element-wise multiplication and × denotes matrix-vector multiplication and · denotes vector-vector dot product.

Therefore, the attention probability *α*(*t, i*) determines the weight of the encoder's hidden vector *hᵢ* in the decoder vector *rₜ.* If *α*(*t, i*) is high, it means that the decoder vector *rₜ* is heavily influenced by the encoder vector at time *i* i.e., *hᵢ.* The decoder vector *rₜ* then determines the probability of the next token/word y_{*t*+1} via a feed-forward layer followed by a linear projection layer that outputs the logits of the | 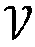 | tokens in the vocabulary 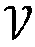 of the transformer ASR system.

The computed cross-attention probabilities *α*(*t*, *i)* provide a probabilistic alignment of the learned encoder features i.e., *H =* (*h*₁, *h*₂, *h*₃, ... , *hₙ*) and decoder sequence of tokens/words *Y =* (*y*₁, *y*₂, ... , *y*_{*t*+1}, ... , *y_{U}*). Let *γₜ* denote the time index *i* = argmaxᵢα*(*t, i*)*.* In other words for a given word y_{*t*+1} that is to be decoded from cross-attention vector *rₜ, γₜ* denotes the time index *i** in the encoder features ((*h*₁, *h*₂, *... , hₙ*)) at which the attention probability *α*(*t, i*) has the maximum value. So, in a way, *γₜ* provides the anchor encoder feature vector index which is majorly influencing the probability of *y*_{*t+*1}. The above description is a detailed low-level explanation of the auto-regressive decoding mechanism of the transformer decoder and its implicit alignment with the encoder learned features i.e., (*h*₁, *h*₂, *..., hᵢ, ... , h_{N}*) and is important for understanding the two problems that have been previously described.

Usually, the maximum attention probability index *γₜ* is monotonically increasing with time i.e., if *t*₁ < *t*₂ resulting in *γ*_{*t*1} < *γ*_{*t*1} and this is consistent with the speech signal and its transcript being causal sequences. Therefore if a token/word y_{*t*1} is aligned with speech encoder features at index *γ*_{*t*₁}, then the word *y*_{*t*₂} recognized at time *t*₂ should majorly be influenced by the speech features at index greater than index *γ*_{*t*₁} i.e., *γ*_{*t*1} < *γ*_{*t*1}*.* However, this is not guaranteed to happen all the time.

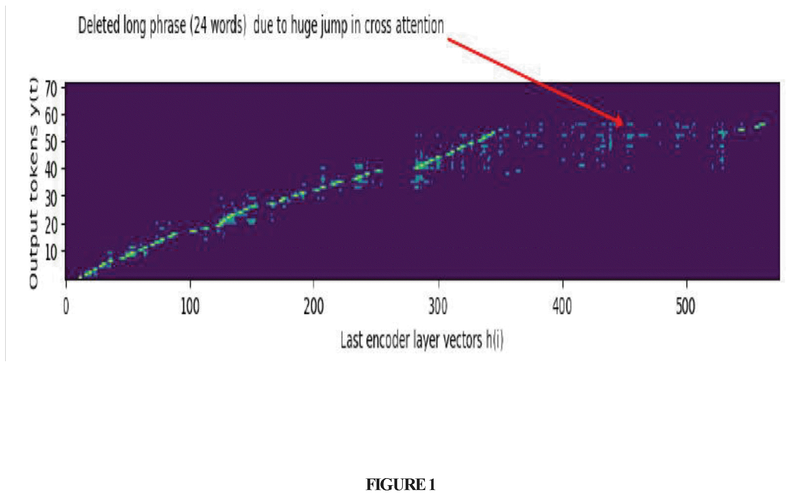

Figure 1 shows the heat maps of the cross-attention probabilities *α*(*t, i*) for a speech utterance where transformer decoder fails to recognize any words in a long speech segment corresponding to the encoder frames 350-560 on x-axis and ground truth *white paper all round it being sure that even the little diamonds in the round window will tell as jewels if they are gradated.* The bright pixels in Figure 1 correspond to the monotonically increasing values of *γ*(*t*) (encoder vector index with maximum cross-attention probability *α*(*t, i*)) for *t* ∈ (1,54) (y-axis) and thereby maintains the causality between the speech signal and the recognized words upto token index 54. However, this causality is lost during at *t =* (55, 56, 57) when *γ*(*t*) jumps directly from *γ*(54) ≈ 350 to *γ*(55) ≈ 550 and therefore the encoder vectors *hᵢ* corresponding to index *i* ∈ 350, 560 are completely ignored and that results in the corresponding phrase being completely deleted as if transformer decoder is deaf to this segment.

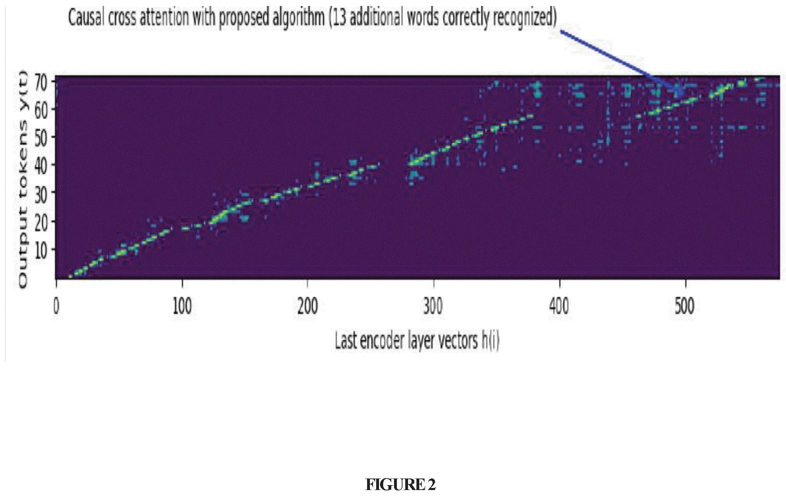

Alternatively, Figure 2 shows the heat maps of the cross-attention probabilities *α*(*t, i*) for a speech utterance where the transformer decoder has partially fixed the monotonic increase of cross-attention corresponding to the encoder frames *i* E (350, 560), leading to 13 additional words being correctly recognized, namely; *white paper all round window will tell as jewels if they are gradated justly.* More specifically, Figure 1 depicts the heat maps for a base-line transformer decoder while Figure 2 depicts the heat maps for a causally induced transformer decoder which implements the proposed algorithm.

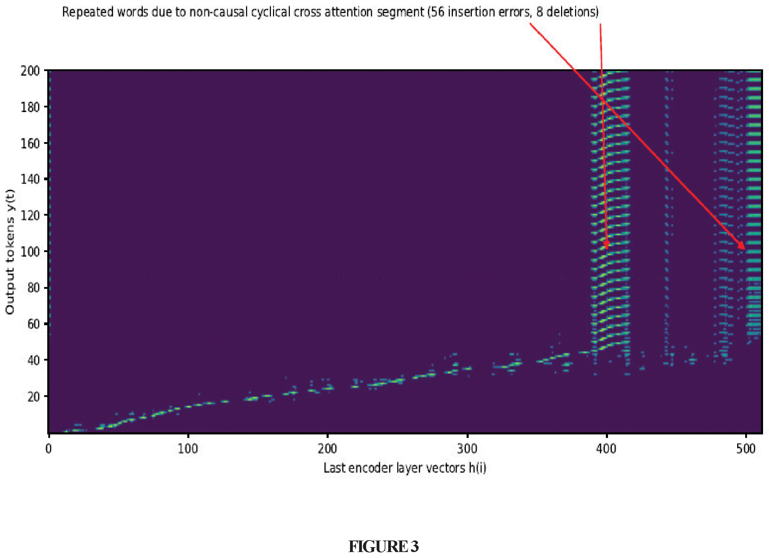

The second kind of problem happens when the transformer decoder starts repeating a phrase multiple times and this is referred to as hallucinations in transformer-based ASR systems. This is shown in Figure 3 where the transformer decoder repeats the phrase *and futility* 56 times, which was spoken just once during *i* ∈ (400, 500). As can be seen in the cross-attention heatmap in Figure 3, the causal monotonicity of *γ*(*t*) is maintained from *i* ∈ (1, 400) (x-axis) and *t* ∈ (1, 50). However, after that *y*(*t*) loses monotonicity and enters a cycle over *i* ∈ (400, 500) and *t* ∈ (50, 200) where it repeatedly decodes the phrase *and futility* as *γ*(*t*) ∈ (400, 500) enter a cycle which breaks the monotonicity and hence causality.

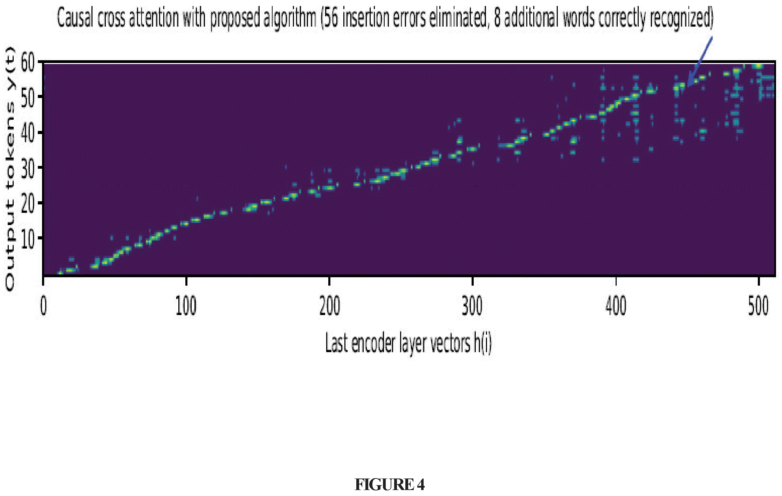

Alternatively, Figure 4 shows the heat maps of the cross-attention probabilities *α*(*t, i*) for a speech utterance where the transformer decoder has partially fixed the monotonic increase of cross-attention corresponding to the encoder frames *i* ∈ (400, 500). More specifically, Figure 3 depicts the heat maps for a base-line transformer decoder while Figure 4 depicts the heat maps for a causally induced transformer decoder which implements the proposed algorithm.

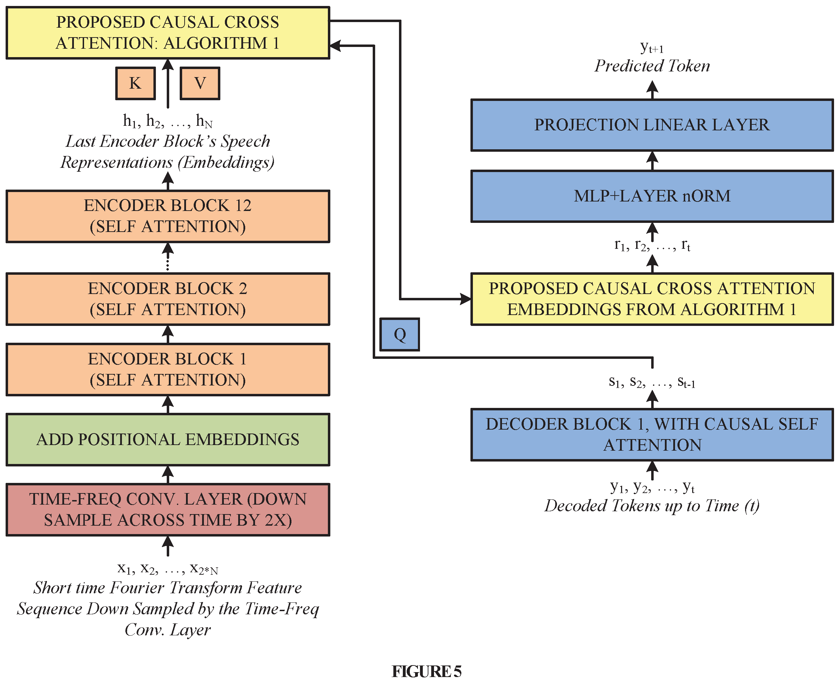

To address the loss of monotonicity in *y*(*t*)*,* an algorithm has been developed which is implemented by the cross-attention layer, illustrated in Figure 5.

To solve the deafness problem, the autoregressive decoding is modified by boosting the probability mass function of cross-attention probabilities *α*(*t*, *i*) slightly to the right of previous maximum cross-attention probability position i.e., *γ*(*t* - 1) (by *δ* = 5 number of frames) for every *t.* Experimentally, *δ* = 5 has been empirically chosen based on the average duration of tokens in a speech signal. On an average, one token corresponds to two-three characters/phonemes which correspond to approximately 100ms of speech signal which is equal to *δ* = 5 frames. This encourages a monotonic increase of *γ*(*t*) while mostly preserving the probability mass function *α*(*t*, *i)* as computed by the cross-attention layer in the equations 3-12. Also, if *γ*(*t*) moves forward by a large number of frames compared to *γ*(*t* - 1) i.e., *y*(*t*) > *γ*(*t* - 1) *+* 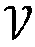 where 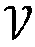 = 60, it means that the cross-attention probability position has moved too much into the future speech frames. Experimentally, 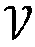 = 60 has been empirically chosen and it corresponds to skipping forward by approximately 1200ms of speech signal which will lead to long deletions in ASR. To overcome this problem the cross-attention probabilities around the future position *γ*(*t*) are scaled down by a factor of 3 i.e., *α*(*t*, *γ*(*t*) - *δ*: *N*) = *α*(*t*, *γ*(*t*) - *δ*: *N*)/3.0 followed by renormalizing the cross-attention probabilities.

It should be noted that Figure 3 shows that when *γ*(*t*) ∈ (400,500), the transformer ASR system enters a cycle which breaks its monotonicity. To detect this problem automatically, *γ*(*t*) and *γ*(*t* - 1) are compared for every *t* during the autoregressive decoding. If *γ*(*t*) < *γ*(*t* - 1) - *δ* where *δ* is empirically tuned, then it is determined that the transformer ASR system is going back in the speech signal by a margin which is greater than or equal to *δ* frames instead of going forward for the current to be decoded token *yₜ.* To fix this problem, the *α*(*t, i)* probability mass is boosted to the right of *γ*(*t* - 1) + *δ* frames i.e., *α*(*t*, *γ*(*t* - 1) + *δ*) = *α*(*t, γ*(*t* - 1) + *δ*) + *β*. The cross-attention probabilities of the past speech frames are also set to zero i.e., *α*(*t,* 1: *γ*(*t* - 1)) = 0.0). The proposed algorithm is presented below as Algorithm 1.

Assume that partial output sequence *Y* = (y₁, y₂, ..., y*ₜ*) has been decoded in the transformer decoder and the transformer decoder is currently autoregressively decoding *y*_{*t*+1}. Given decoder self-attention vector *sₜ,* find the cross-attention with the last encoder layer vectors *H = h*₁, *h*₂, *... , h_{N}*:

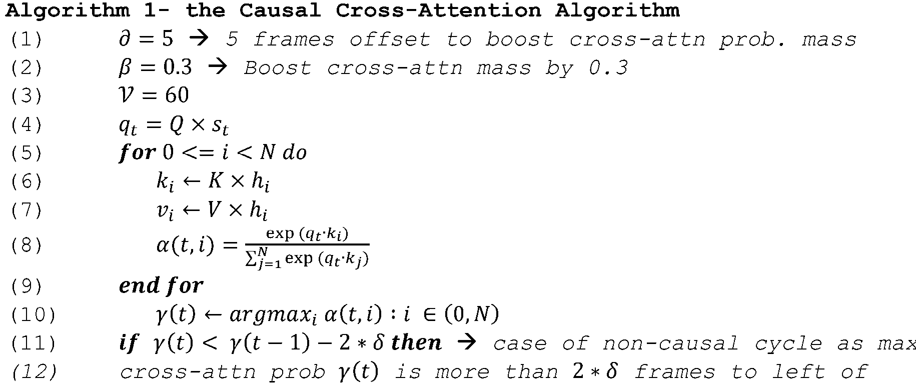

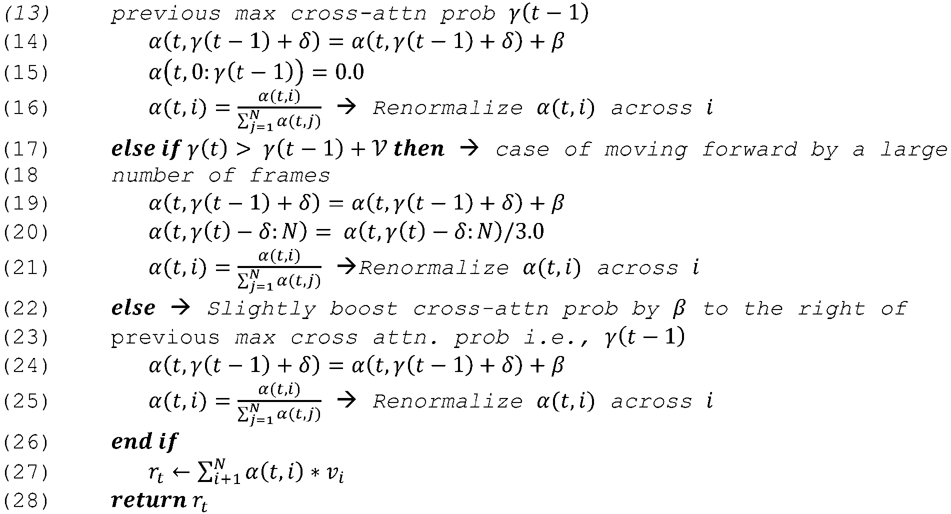

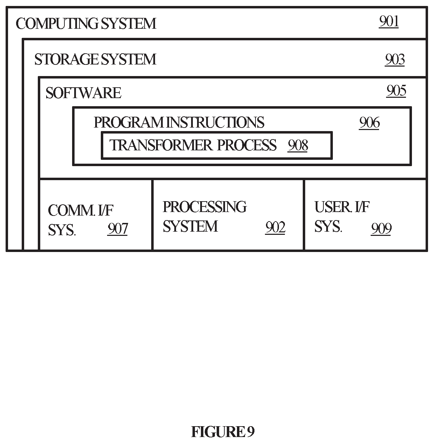

It may be appreciated that Algorithm 1 may be implemented as program code that, when executed by processing circuitry, causes the processing circuitry to boost a cross-attention probability centroid by a desired factor. For example, Algorithm 1 may be implemented as program code that is executable by computing system 901 of Figure 9.

In an initial research study, a conformer model with 12 encoder layers and 1 decoder layer is trained using the Wenet library. More specifically, a baseline conformer model along with its baseline auto regressive decoding algorithm is trained. It should be noted that the only way in which a conformer model differs from a transformer model is that the conformer has an additional convolution layer in its encoder. Since Algorithm 1 extends only the encoder-decoder cross-attention mechanism, it is applicable to both the transformer and conformer ASR architectures and in the following sections, the experimental results are presented within the conformer ASR architecture.

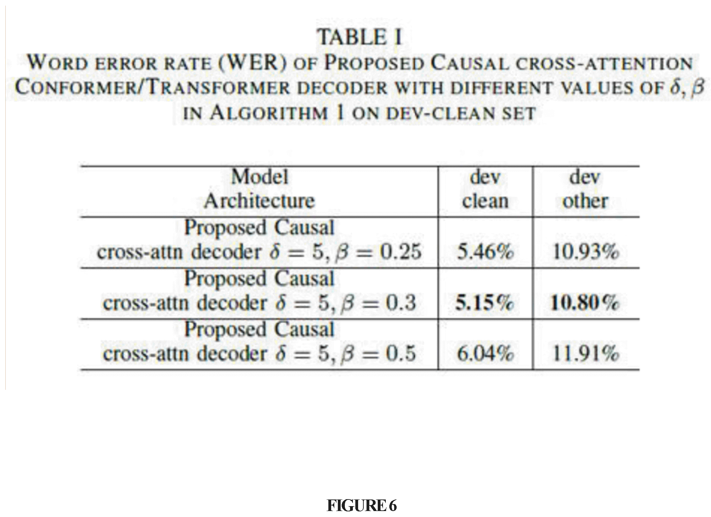

In a first experiment, the conformer has twelve encoder layers, one decoder layer, one head, and an embedding dimension of 768. The conformer model is trained on 960 hours of Librispeech train-set. An Adam optimizer with an Initial learning rate *lr =* 1*e* - 3 is used for a fixed number of 50 epochs. The hyperparameters *δ*, *β*, 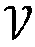 have been empirically tuned over the Librispeech dev-clean and dev-other sets. The WERs are shown below in Table I of Figure 6, such that the best results (*δ* = 5,*β* = 0.3, 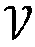 = 60) were obtained as detailed in the Algorithm 1.

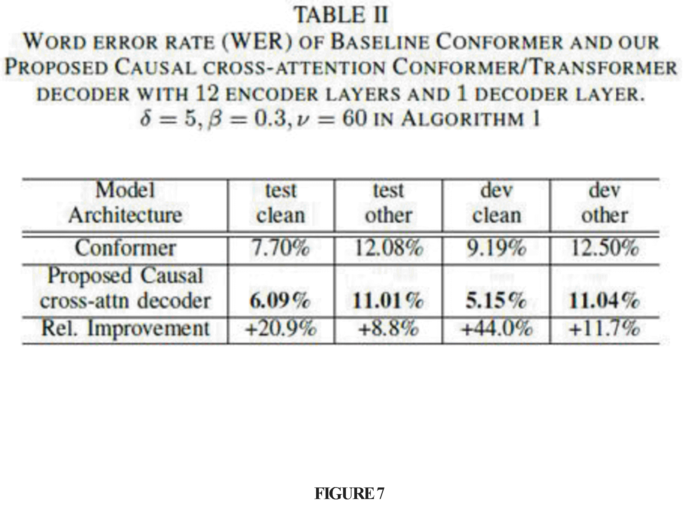

In Table II of Figure 7, the WERs of the baseline conformer model are presented, along with its autoregressive decoder and proposed causal cross-attention decoder over the two dev sets and two test sets of Librispeech dataset. As can be seen from the WERs, the proposed algorithm obtains about 15% average relative improvement in reducing the WER as compared to the baseline conformer decoder over the two-test set (test-clean, test-other). This 15% average relative reduction in WER is obtained by implementing Algorithm 1, thereby reducing the long deletions (deafness problem) and repeated words insertion errors (hallucinations) in the baseline conformer decoder.

Alternatively, in a second experiment with multiple decoder layers, the causal cross-attention decoder algorithm is extended to a conformer architecture with 6 decoder layers. During the analysis of the cross-attention probabilities of the multilayer conformer decoder, it is observed that the first ASR decoder layer puts all the cross-attention probability mass *α*(*t, i)* towards the last speech frame of the final encoder layer's embeddings i.e., *hₙ, n* ≈ *N* for all decoded tokens *y*(*t*).

This strange phenomenon has also been observed in text LLMs (termed Attention-Sink in text LLMs) where the researchers have shown that the initial layers of a text LLM decoder puts a lot attention on the first few tokens (which carry no semantic information) but is nevertheless important for the accuracy of the LLMs. As the text LLMs do not have any encoder, they only attend to the following sequence of tokens (*prompt* - *text, < begin - transcript* >, *y*₁, *y*₂, ... , y_{*t*-1}).

Whereas, in the case of ASR an encoder-decoder architecture, and the ASR decoder attends via cross-attention to both the encoder speech frames i.e., *h*₁, *h*₂, ... , *h_{N}* and the decoder tokens up to time *t -* 1 i.e., *y*₁, *y*₂, ... , *y*_{*t*-1}*.* This phenomenon has been termed attention-sink in text LLMs, which is observed in the multi-layer ASR decoder. Therefore, in this study the baseline cross-attention in the initial five decoder layers is retained (along with its Attention-Sink phenomenon) and apply the causal cross-attention algorithm only to the final decoder layer i.e., the sixth layer. This design choice is made based on the observation that it is the last decoder layer (i.e., the sixth layer) which is majorly influencing the final prediction of the next token/word. Therefore, despite the existence of the Attention-Sink in the bottom layers, the effect of the proposed causal cross-attention algorithm can be studied by applying it to the final decoder layer to a reasonable extent.

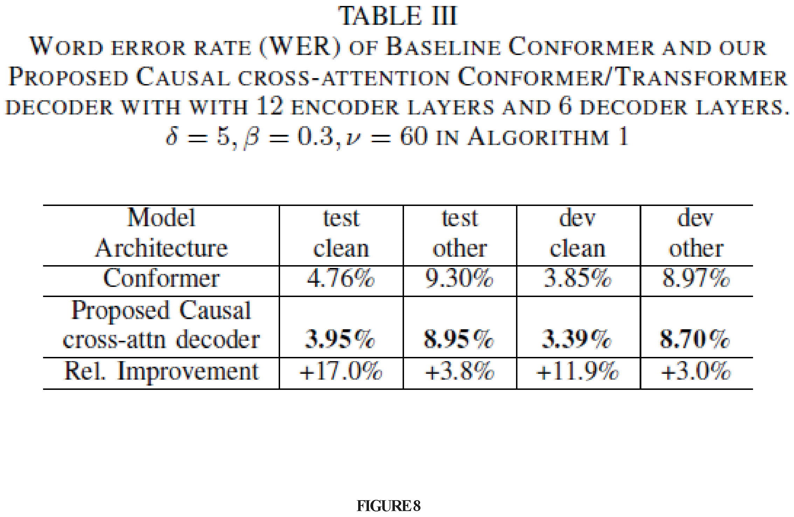

The WER results obtained by applying the causal cross-attention algorithm to only the sixth decoder layer is presented in Table III of Figure 8. As expected, the WERs of both the baseline and proposed causal cross-attention systems improve with six decoder layers compared to the 1 decoder layer in Table II. The same values of hyperparameters i.e., *δ* = 5, *β* = 0.3*,* 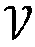 = 60 are used as in single decoder layer experiments.

From Table III, it can be seen that Algorithm 1 provides an average relative improvement of 8.9% in reducing the WER over the four test sets, namely test-clean, test-other, dev-clean and dev-other. It should be noted that the relative improvement is higher for the test-clean and dev-clean sets and is moderate for the test-other and dev-other test sets. This may be due to the fact that the Algorithm 1 was only applied to the final sixth decoder layer due to the presence of the attention sink in the initial decoder layers. However, it is encouraging to see that despite this limitation, Algorithm 1 still provides a modest relative improvement of 3.4% in the test-other and dev-other sets and a large relative improvement of 14.5% in test-clean and dev-clean sets and thereby confirming the efficacy of the proposed causal cross-attention algorithm.

The proposed causal cross-attention decoding algorithm (i.e., Algorithm 1) for a single transformer decoder layer as well as multiple decoder layers and the experiments indicate that the alogrithm leads to 8.9% average relative reduction in WER as compared to baseline conformer decoder. Due to the phenomenon of attention-sink that was observed in the initial layers of the six layer ASR conformer decoder, the causal cross-attention algorithm is only applied to the final sixth layer of the conformer decoder. Future work will explore the interaction of attention-sink in the initial layers of the ASR decoder with Algorithm 1 applied to all the decoder layers with appropriate modifications.

This work presents causality induced transformer attention decoder which helps to reduce the long deletions and hallucinations errors (multiple repetitions of a word/phrase) in a transformer/conformer ASR system. It is empirically shown (via cross-attention probabilities heatmaps) that these errors happen due to poor alignment between the underlying encoder representations (*h*₁, *h*₂, *... , h_{N}*) and the decoded tokens *yₜ*. A novel algorithm (i.e., Algorithm 1) is then introduced that, at a high level, attempts to make the cross-attention probabilities time causal with respect to the decoded tokens *yₜ*. This leads to better alignment between the cross-attention probabilities and the decoded token *yₜ* and the results show that the proposed causal cross-attention algorithm provides an average relative improvement of 8.9% in reducing the WER over the four Librispeech test sets, namely test-clean, test-other, dev-clean and dev-other compared to the baseline conformer decoder.

Figure 9 illustrates an example computer system that may be used in various implementations. For example, computing system 901 may depict a computing device capable of executing the layers of a transformer ASR system as described herein. Computing system 901 is representative of any system or collection of systems with which the various operational architectures, processes, scenarios, and sequences disclosed herein for executing the cross-attention mechanisms of a transformer encoder-decoder may be employed. Examples of computing system 901 include - but are not limited to - micro controller units (MCUs), embedded computing devices, server computers, cloud computers, personal computers, mobile phones, and the like.

Computing system 901 may be implemented as a single apparatus, system, or device or may be implemented in a distributed manner as multiple apparatuses, systems, or devices. Computing system 901 includes, but is not limited to, processing system 902, storage system 903, software 905, communication interface system 907, and user interface system 909 (optional). Processing system 902 is operatively coupled with storage system 903, communication interface system 907, and user interface system 909. Computing system 901 may be representative of a cloud computing device, distributed computing device, or the like.

Processing system 902 loads and executes software 905 from storage system 903, or alternatively, runs software 905 directly from storage system 903. Software 905 includes program instructions 906, which includes transformer process 908 (*e.g*., Algorithm 1). When executed by processing system 902, software 905 directs processing system 902 to operate as described herein for at least the various processes, operational scenarios, and sequences discussed in the foregoing implementations. Computing device 901 may optionally include additional devices, features, or functions not discussed for purposes of brevity.

Referring still to Figure 9, processing system 902 may comprise a micro-processor and other circuitry that retrieves and executes software 905 from storage system 903. Processing system 902 may be implemented within a single processing device but may also be distributed across multiple processing devices or sub-systems that cooperate in executing program instructions. Examples of processing system 902 include general purpose central processing units, graphical processing units, digital signal processing units, data processing units, application specific processors, and logic devices, as well as any other type of processing device, combinations, or variations thereof.

Storage system 903 may comprise any computer readable storage media readable and writeable by processing system 902 and capable of storing software 905. Storage system 903 may include volatile and nonvolatile, removable and non-removable, mutable and non-mutable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 903 may also include computer readable communication media over which at least some of software 905 may be communicated internally or externally. Storage system 903 may be implemented as a single storage device but may also be implemented across multiple storage devices or sub-systems co-located or distributed relative to each other. Storage system 903 may comprise additional elements, such as a controller, capable of communicating with processing system 902 or possibly other systems.

Software 905 may be implemented in program instructions 906 and among other functions may, when executed by processing system 902, direct processing system 902 to operate as described with respect to the various operational scenarios, sequences, and processes illustrated herein. In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 905 may include additional processes, programs, or components, such as operating system software, virtualization software, or other application software. Software 905 may also comprise firmware or some other form of machine-readable processing instructions executable by processing system 902.

In general, software 905 may, when loaded into processing system 902 and executed, transform a suitable apparatus, system, or device (of which computing device 901 is representative) overall from a general-purpose computing system into a special-purpose computing system customized to support binary convolution operations. Indeed, encoding software 905 (and transformer process 908) on storage system 903 may transform the physical structure of storage system 903. The specific transformation of the physical structure may depend on various factors in different implementations of this description. Examples of such factors may include, but are not limited to, the technology used to implement the storage media of storage system 903 and whether the computer-storage media are characterized as primary or secondary, etc.

For example, if the computer readable storage media are implemented as semiconductor-based memory, software 905 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 907 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 901 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The aforementioned communication networks and protocols are well known and need not be discussed at length here.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

As will be appreciated by one skilled in the art, aspects of the present invention may be embodied as a system, method, or computer program product. Accordingly, aspects of the present invention may take the form of an entirely hardware implementation, an entirely software implementation (including firmware, resident software, micro-code, etc.) or an implementation combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Indeed, the included descriptions and figures depict specific implementations to teach those skilled in the art how to make and use an example mode. For the purpose of teaching inventive principles, some conventional aspects have been simplified or omitted. Those skilled in the art will appreciate variations from these implementations that fall within the scope of the disclosure. Those skilled in the art will also appreciate that the features described above may be combined in various ways to form multiple implementations. As a result, the invention is not limited to the specific implementations described above, but only by the claims and their equivalents.

The above description and associated figures teach example embodiments of the invention. The following claims specify the scope of the invention. Those skilled in the art will appreciate that the features described above can be combined in various ways to form example embodiments of the invention. Thus, the invention is limited only by the following claims and their equivalents.

Thus, from one perspective, there has now been described a system comprising processing circuitry configured to execute a transformer network. The transformer network includes a cross-attention layer. The processing circuitry is configured to, for the cross-attention layer, boost a cross-attention probability centroid by a desired factor.

Further examples of feature combinations taught by the present disclosure are set out in the following numbered clauses:
1. A system comprising:
   processing circuitry configured to execute a transformer network, wherein the transformer network includes a cross-attention layer, and wherein the processing circuitry is configured to, for the cross-attention layer, boost a cross-attention probability centroid by a desired factor.
2. Any device, apparatus, process, method, integrated circuit, system, circuitry or technique described in this disclosure.
3. Any device, apparatus, integrated circuit, system, or circuitry that implements all or part of any technique or combination of techniques described in this disclosure.

## Claims

1. A system comprising:
processing circuitry configured to execute a transformer network, wherein the transformer network includes a cross-attention layer, and wherein the processing circuitry is configured to, for the cross-attention layer, boost a cross-attention probability centroid by a desired factor.

2. Any device, apparatus, process, method, integrated circuit, system, circuitry or technique described in this disclosure.

3. Any device, apparatus, integrated circuit, system, or circuitry that implements all or part of any technique or combination of techniques described in this disclosure.
